(19) Europäisches Patentamt
European Patent Office
Office européen des brevets

(11) EP 4 438 639 A1

(12) EUROPEAN PATENT APPLICATION
published in accordance with Art. 153(4) EPC

(43) Date of publication:
**02.10.2024 Bulletin 2024/40**

(21) Application number: **22899051.1**

(22) Date of filing: **24.11.2022**

(51) International Patent Classification (IPC):
***C08F 210/16*** *(2006.01)* ***C08F 4/6592*** *(2006.01)*
***C08F 4/659*** *(2006.01)* ***C08L 23/00*** *(2006.01)*
***C08L 23/08*** *(2006.01)*

(52) Cooperative Patent Classification (CPC):
**C08F 4/659; C08F 4/6592; C08F 210/16; C08L 23/00; C08L 23/08**

(86) International application number:
**PCT/KR2022/018708**

(87) International publication number:
**WO 2023/096369 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 KR 20210163904**

(71) Applicant: **LOTTE CHEMICAL CORPORATION**
**Seoul 05551 (KR)**

(72) Inventors:
- **HONG, Youn-Jin**
**Daejeon 34110 (KR)**
- **KIM, Hye-Seon**
**Daejeon 34110 (KR)**
- **KIM, Ho-Seok**
**Daejeon 34110 (KR)**
- **LEE, Rai-Ha**
**Daejeon 34110 (KR)**
- **SHIN, Eun-Hye**
**Daejeon 34110 (KR)**
- **CHAE, Byung-Hun**
**Daejeon 34110 (KR)**

(74) Representative: **Germain Maureau**
**12, rue Boileau**
**69006 Lyon (FR)**

# (54) ETHYLENE ALPHA-OLEFIN COPOLYMER AND RESIN COMPOSITION CONTAINING SAME

(57) A purpose of the present invention is to provide an ethylene alpha-olefin copolymer having specific ranges of density and melt index and a wide distribution of lamella thickness. The present invention provides an ethylene alpha-olefin copolymer including an ethylene structure unit and an alpha-olefin structure unit, wherein the ratio of lamella having a thickness of 4 nm or more to all lamellae is 10% or more.

FIG. 1

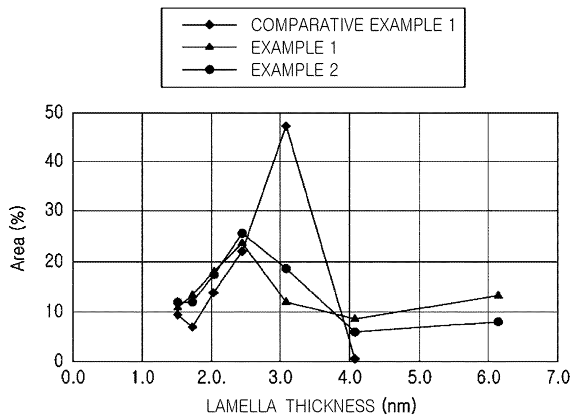




Processed by Luminess, 75001 PARIS (FR)

## Description

### Technical Field

The present disclosure relates to an ethylene alpha-olefin copolymer and a resin composition including the same.

### Background Art

Polyolefin is a widely used polymer material, and to improve low-temperature properties and mechanical properties of polyolefin, it has mainly been used by mixing an ethylene alpha-olefin copolymer.
However, in order to obtain sufficient low-temperature properties and improved mechanical properties, a low-density ethylene alpha-olefin copolymer should be mixed, and when such a low-density ethylene alpha-olefin copolymer is mixed in excessive amounts, there may be a problem in that tensile strength of a composite resin decreases.
Accordingly, research into a method to improve the low-temperature and mechanical properties of the composite resin without reducing the tensile strength thereof is required.

[Prior art Document]

(Patent Document 1) Korean Patent Publication 10-2016-0066979 A

### Summary of Invention

### Technical Problem

An aspect of the present disclosure is to provide an ethylene alpha-olefin copolymer with a specific range of density and melt index and a wide lamella thickness distribution.
Another aspect of the present disclosure is to provide a resin composition including the ethylene alpha-olefin copolymer.

### Solution to Problem

According to another aspect of the present disclosure, in an ethylene alpha-olefin copolymer including an ethylene structural unit and an alpha-olefin structural unit, an ethylene alpha-olefin copolymer having a ratio of lamella with a thickness of 4 nm or more to all lamellae of 10% or more is provided.
According to another aspect of the present disclosure, a resin composition including polyolefin and the ethylene alpha-olefin copolymer is provided.

### Advantageous Effects of Invention

As set forth above, according to the present disclosure, an ethylene alpha-olefin copolymer includes both a low- crystalline region with a thin lamella thickness and a high-crystalline region with a thick lamella thickness, so the ethylene alpha-olefin copolymer has a wide lamella thickness distribution.
When this ethylene alpha-olefin copolymer is mixed with polyolefin, a resin composition having high impact strength without decreased tensile strength is provided.

### Brief Description of Drawings

FIG. 1 is a diagram illustrating a ratio of lamella for each thickness of ethylene alpha-olefin copolymers prepared in Examples and Comparative Examples.

### Best Mode for Invention

Hereinafter, preferred embodiments of the present disclosure will be described. However, the following embodiments of the present disclosure may be modified to have various other forms, and the scope of the present disclosure is not limited thereto.
The term "alkyl," as used in the present disclosure, refers to a monovalent linear or branched saturated hydrocarbon radical consisting of only carbon and hydrogen atoms. Examples of such alkyl radicals are methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl,

cyclooctyl, cyclononyl, cyclodecyl, and the like, but the present disclosure is not limited thereto.

In addition, the term "alkenyl," as used in the present disclosure, refers to a linear or branched hydrocarbon radical containing one or more carbon-carbon double bonds, and includes ethenyl, propenyl, butenyl, pentenyl, and the like, but the present disclosure is not limited thereto.

In addition, the term "alkynyl," as used in the present disclosure, refers to a linear or branched hydrocarbon radical containing one or more carbon-carbon triple bonds, such as methynyl, ethynyl, propynyl, butynyl, pentynyl, hexynyl, heptinyl, octinyl, and the like, but the present disclosure is not limited thereto.

In addition, the term "aryl," as used in the present disclosure is an organic radical derived from an aromatic hydrocarbon by removing one hydrogen, and "aryl" includes a single or fused ring system. Specific examples of "aryl" include phenyl, naphthyl, biphenyl, anthryl, fluorenyl, phenanthryl, triphenylenyl, pyrenyl, perylenyl, chrysenyl, naphthacenyl, fluoranthenyl, and the like, but the present disclosure is not limited thereto.

In addition, the term "alkylaryl, " as used in the present disclosure, refers to an organic group in which one or more hydrogens of an aryl group are substituted with an alkyl group, and include methylphenyl, ethylphenyl, n-propylphenyl, isopropylphenyl, n-butylphenyl, isopropylphenyl, n-butylphenyl, isobutylphenyl, t-butylphenyl, and the like, but the present disclosure is not limited thereto.

In addition, the term "arylalkyl, " as used in the present disclosure, refers to an organic group in which one or more hydrogens of an alkyl group are substituted with an aryl group, and includes, phenylpropyl, phenylhexyl, and the like, but the present disclosure is not limited thereto.

In addition, the term "amido," as used in the present disclosure, refers to an amino group ($-NH_2$) bonded to a carbonyl group (C=O), the term "alkylamido" refers to an organic group in which at least one hydrogen in $-NH_2$ of an amido group is substituted with an alkyl group, the term "arylamido" refers to an organic group in which at least one hydrogen in $-NH_2$ of the amido group is substituted with an aryl group, and the alkyl group in the alkylamido group and the aryl group in the arylamido group may be the same as the examples of the alkyl group and aryl group described above, but the present disclosure is not limited thereto.

In addition, the term "alkylidene," as used in the present disclosure, refers to a divalent aliphatic hydrocarbon group in which two hydrogen atoms are removed from the same carbon atom of the alkyl group, and includes ethylidene, propylidene, isopropylidene, butylidene, pentylidene, and the like, but the present disclosure is not limited thereto.

In addition, the term "acetal," as used in the present disclosure, refers to an organic group formed by a bond of alcohol and aldehyde, that is, a substituent with two ether (-OR) bonds on one carbon atom, and includes methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(secondary-butoxy)ethoxy, 1-(tertiary-butoxy)ethoxy, 1-(cyclohexyloxy) ethoxy, 1-methoxy-1-methylmethoxy, 1-methoxy-1-methylethoxy, and the like, but the present disclosure is not limited thereto.

In addition, the term "ether," as used in the present disclosure, refers to an organic group having at least one ether bond (-O-), and includes 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like, but the present disclosure is not limited thereto.

In addition, the term "silyl," as used in the present disclosure, refers to a $-SiH_3$ radical derived from silane, and at least one of hydrogen atoms in the silyl group may be substituted with various organic groups such as alkyl and halogen, and specifically, includes trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimeroxysilyl, ethyldiethoxysilyl, triethoxysilyl, vinyldimethoxysilyl, triphenoxysilyl, and the like, but the present disclosure is not limited thereto.

In addition, the term "alkoxy," as used in the present disclosure, refers to an -O-alkyl radical, where 'alkyl' is as defined above. Examples of such alkoxy radicals include, methoxy, ethoxy, propoxy, isopropoxy, butoxy, isobutoxy, t-butoxy, and the like, but the present disclosure is not limited thereto.

In addition, the term "halogen," as used in the present disclosure, refers to a fluorine, chlorine, bromine or iodine atom.

In addition, the term "Cn" described in the present disclosure means n carbon atoms.

The ethylene alpha-olefin copolymer according to the present disclosure has a specific range of density and melt index and at the same time has a wide lamella thickness distribution. A low-crystalline region of the copolymer has a thin lamella thickness and a high-crystalline region thereof has a wide lamella thickness, so when the low-crystalline region and the high-crystalline region exist simultaneously, the lamella thickness distribution becomes wider. Therefore, a resin composition formed by mixing the ethylene alpha-olefin copolymer with polyolefin according to the present disclosure may have improved impact strength due to the low-crystalline region of the ethylene alpha-olefin copolymer. In addition, the high-crystalline region of the ethylene alpha-olefin copolymer prevents a decrease in tensile strength due to an increase in the low-crystalline region in the resin composition, thereby providing a resin composition having sufficient tensile strength and impact strength.

An aspect of the present disclosure is to provide an ethylene alpha-olefin copolymer including an ethylene

structural unit and an alpha-olefin structural unit, wherein a ratio of lamella having a thickness of 4nm or more to all lamellae is 10% or more.

The alpha-olefin may be an aliphatic alpha-olefin of $C_2$-$C_{12}$ or $C_2$-$C_8$. More specifically, the alpha-olefin may be propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene or 3,4-dimethyl-1-hexene, and any one or a mixture of two or more thereof may be used.

A ratio of ethylene structural units and alpha-olefin structural units in the ethylene alpha-olefin copolymer is not particularly limited, but it is preferable that ethylene: alpha-olefin be present in a weight ratio of 1:0.5 to 1:1.3. When the ethylene structural unit and the alpha-olefin structural unit are present in the above-described weight ratio, an ethylene alpha-olefin copolymer having a high molecular weight and a high comonomer content may be obtained.

In the present disclosure, the polymerization of ethylene and alpha-olefin may be performed under a catalyst composition containing R-type and S-type transition metal compounds represented by the following formula 1.

[Formula 1]

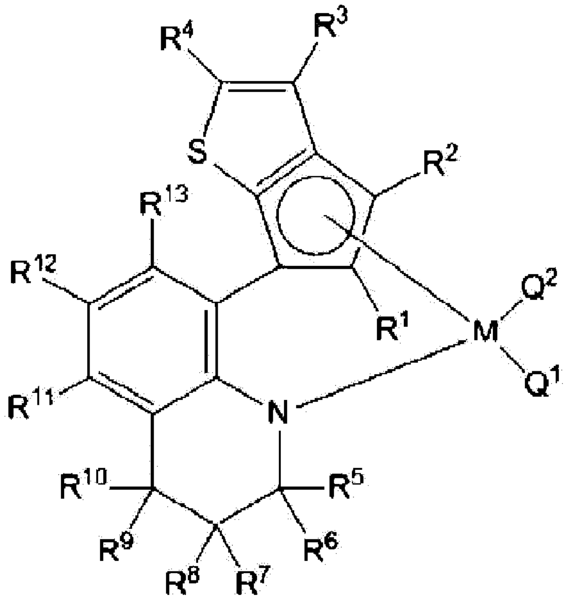

In Formula 1 above,

M is a Group 4 transition metal;

$Q^1$ and $Q^2$ are each independently halogen, $(C_1$-$C_{20})$alkyl, $(C_2$-$C_{20})$alkenyl, $(C_2$-$C_{20})$alkynyl, $(C_6$-$C_{20})$aryl, $(C_1$-$C_{20})$alkyl $(C_6$-$C_{20})$aryl, $(C_6$-$C_{20})$aryl $(C_1$-$C_{20})$alkyl, $(C_1$-$C_{20})$alkylamido, $(C_6$-$C_{20})$arylamido or $(C_1$-$C_{20})$alkylidene;

$R^1$, $R^2$, $R^3$, $R^4$, $R^5$, $R^6$, $R^7$, $R^8$, $R^9$ and $R^{10}$ are each independently hydrogen; $(C_1$-$C_{20})$alkyl with or without acetal, ketal or ether groups; $(C_2$-$C_{20})$alkenyl with or without acetal, ketal or ether groups; $(C_1$-$C_{20})$alkyl $(C_6$-$C_{20})$aryl with or without acetal, ketal or ether groups; $(C_6$-$C_{20})$aryl $(C_1$-$C_{20})$alkyl with or without acetal, ketal or ether groups; or $(C_1$-$C_{20})$silyl with or without acetal, ketal or ether groups; $R^1$ and $R^2$ may be connected to each other to form a ring, and $R^3$ and $R^4$ may be connected to each other to form a ring, and two or more of $R^5$ to $R^{10}$ may be connected to each other to form a ring;

$R^{11}$, $R^{12}$ and $R^{13}$ are each independently hydrogen; $(C_1$-$C_{20})$alkyl with or without acetal, ketal or ether groups; $(C_2$-$C_{20})$alkenyl with or without acetal, ketal or ether groups; $(C_1$-$C_{20})$alkyl $(C_6$-$C_{20})$aryl with or without acetal, ketal or ether groups; $(C_6$-$C_{20})$aryl $(C_1$-$C_{20})$alkyl with or without acetal, ketal or ether groups; $(C_1$-$C_{20})$silyl with or without acetal, ketal or ether groups; $(C_1$-$C_{20})$alkoxy; or $(C_6$-$C_{20})$aryloxy; $R^{11}$ and $R^{12}$ may be connected to each other to form a ring, and $R^{12}$ and $R^{13}$ may be connected to each other to form a ring.

A transition metal compound represented by Formula 1 includes a new structural ligand in which an amido ligand and ortho-phenylene form a condensed ring, and a pentagonal pi-ligand bonded to the ortho-phenylene is fused by a thiophene heterocycle. Accordingly, the transition metal compound has the advantage of having a high copolymerization activity of ethylene and alpha-olefin compared to a transition metal compound in which a thiophene hetero ring

is not fused.

According to the present disclosure, in the transition metal compound represented by Formula 1, $R^1$, $R^2$, R3, $R^4$, $R^5$, $R^6$, $R^7$, $R^8$, $R^9$, $R^{10}$, $R^{11}$, $R^{12}$, and $R^{13}$ may each be independently substituted with a substituent including an acetal, ketal or ether group, and when substituted with the above-described substituents, it may be more advantageous to support the transition metal compound on a surface of a carrier.

In addition, in the transition metal compound represented by Formula 1, M may be titanium (Ti), zirconium (Zr), or hafnium (Hf).

In addition, in the transition metal compound represented by Formula 1, it may be preferable that $Q^1$ and $Q^2$ are each independently halogen or $(C_1-C_{20})$alkyl, and more preferably chlorine or methyl.

In addition, in the transition metal compound represented by Formula 1, $R^1$, $R^2$, $R^3$, $R^4$, and $R^5$ may each independently be hydrogen or $(C_1-C_{20})$alkyl, and preferably may each independently be hydrogen or methylyl. More preferably, $R^1$, $R^2$, R3, $R^4$, and $R^5$ may each independently be hydrogen or methyl, but at least one of $R^3$ and $R^4$ may be methyl, and $R^5$ may be methyl.

In addition, in the transition metal compound represented by Formula 1, the $R^6$, $R^7$, $R^8$, $R^9$, $R^{10}$, $R^{11}$, $R^{12}$ and $R^{13}$ are each preferably hydrogen.

The transition metal compound represented by Formula 1 preferably includes the above-described substituents to control electronic and steric environment around the metal.

Meanwhile, the transition metal compound represented by Formula 1 may be obtained from a precursor compound represented by Formula 5 below.

[Formula 5]

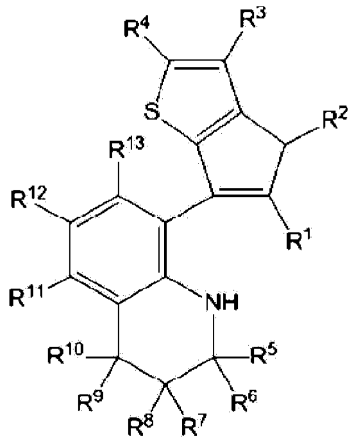

In Formula 5 above, $R^1$, $R^2$, $R^3$, $R^4$, $R^5$, $R^6$, $R^7$, $R^8$, $R^9$, $R^{10}$, $R^{11}$, $R^{12}$, and $R^{13}$ are each as defined in Formula 1 above.

Here, the precursor compound represented by Formula 5 may be prepared by a method including operations of (i) reacting a tetrahydroquinoline derivative represented by Formula 6 below with alkyl lithium and then adding carbon dioxide to prepare a compound represented by Formula 7; and (ii) reacting the compound represented by Formula 7 with alkyl lithium, then adding a compound represented by Formula 8 below and treating the same with acid:

[Formula 6]

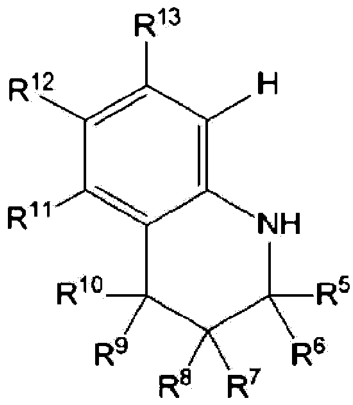

[Formula 7]

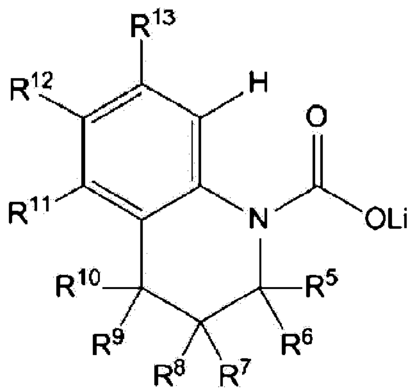

[Formula 8]

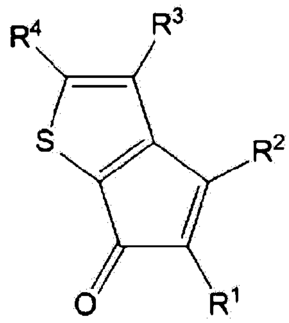

In Formulas 6, 7, and 8, $R^1$, $R^2$, $R^3$, $R^4$, $R^5$, $R^6$, $R^7$, $R^8$, $R^9$, $R^{10}$, $R^{11}$, $R^{12}$, and $R^{13}$ are each as defined in Formula 1.

However, in Formulas 6, 7, and 8, $R^1$, $R^2$, $R^3$, $R^4$ and $R^5$ may each independently be hydrogen or $(C_1\text{-}C_{20})$alkyl, and may preferably each independently be hydrogen or methyl. More preferably, $R^1$, $R^2$, R3, $R^4$ and $R^5$ may each independently be hydrogen or methyl, but at least one of $R^3$ and $R^4$ may be methyl, and $R^5$ may be methyl. In addition, $R^6$, $R^7$, $R^8$, $R^9$, $R^{10}$, $R^{11}$, $R^{12}$, and $R^{13}$ are each preferably hydrogen. Thereby, accessibility and reactivity of a starting material thereof may be secured, and it is advantageous for controlling electronic and steric environment of a transition metal compound of Formula 1 to be prepared.

In the preparation of the precursor compound represented by Formula 5, the operation (i) is a reaction of reacting a tetrahydroquinoline derivative represented by Formula 6 with alkyl lithium and then adding carbon dioxide to convert the same into the compound represented by Formula 7, which may be performed according to the methods

described in known literature (Tetrahedron Lett. 1985, 26, 5935; Tetrahedron 1986, 42, 2571; J.Chem.SC.Perkin Trans. 1989, 16.).

In addition, in the operation (ii), a deprotonation reaction may be induced by reacting alkyl lithium with the compound represented by Formula 7 to produce an ortho-lithium compound, a transition metal compound precursor represented by Formula 5 may be obtained by reacting the compound represented by Formula 8 and treating the same with acid.

The reaction of producing an ortho-lithium compound by reacting alkyl lithium with the compound represented by Formula 7 may be identified from known literature (Organometallics 2007, 27, 6685; Republic of Korea Patent Publication No. 2008-0065868), and in the present disclosure, a transition metal compound precursor represented by Formula 5 may be obtained by reacting the compound represented by Formula 8 and treating the same with acid.

Here, the compound represented by Formula 8 may be prepared through various known methods. Reaction Scheme 1 below illustrates one example, and not only can it be prepared with only one reaction step, but it also uses inexpensive starting materials, making it possible to easily and economically prepare the transition metal compound precursor of the present disclosure (J Organomet. Chem., 2005, 690, 4213).

[Reaction scheme]

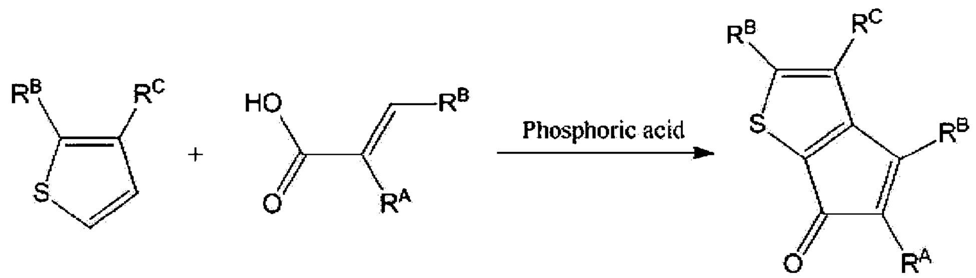


Meanwhile, various known methods may be used to synthesize the transition metal compound represented by Formula 1 from the precursor compound represented by Formula 5 obtained through the above method. By adding about 2 equivalents of alkyllithium to the precursor compound represented by Formula 5 to induce a deprotonation reaction, it may be prepared by preparing a dilithium compound of cyclopentadienyl anion and amide anion, and then adding$(Q^1)(Q^2)MCl_2$ thereto and removing about 2 equivalents of LiCl.

In addition, the compound represented by Formula 5 is reacted with the $M(NMe_2)_4$ compound to remove about 2 equivalents of $HNMe_2$ to obtain a transition metal compound represented by Formula 1 in which $Q^1$ and $Q^2$ are both $NMe_2$, and $Me_3SiCl$ or $Me_2SiCl_2$ may be reacted therewith, so that a $NMe_2$ ligand can be changed to a chlorine ligand.

Since the transition metal compound represented by Formula 1 prepared through the above process includes R-type and S-type, when a polymerization reaction is performed under a catalyst composition containing both of these structures, two types of polymers with different structures and physical properties may be formed.

It is determined to be due to a difference in ethylene conversion rates between R-type and S-type. Comonomer conversion rates of R-type and S-type are similar, but may have different ethylene conversion rates due to a difference in steric structure. Specifically, in the case of the R-type, a space into which ethylene can be inserted is wider than that of the S-type, so additional energy is required to form a specific arrangement for the polymerization reaction. Therefore, the R-type may exhibit a low ethylene conversion rate, and thus may form a polymer chain with a relatively high comonomer content and thin lamella thickness. On the other hand, the S-type may exhibit a high ethylene conversion rate and may form a polymer chain with a relatively low comonomer content and thick lamella thickness.

In order to prepare an ethylene alpha-olefin copolymer containing two types of polymer chains with different comonomer contents under the catalyst composition, it is preferable that the R-type and the S-type are present in a molar ratio of 1:0.1 to 1:1. If the molar ratio is less than 1:0.1, a large amount of low-density polymer chains are formed due to the predominance of the R-type, which may cause stickiness of a product. If the molar ratio exceeds 1:1, a large amount of high-density polymer chains are formed, and sufficient impact strength may not be secured.

In the present disclosure, the catalyst composition may further include a cocatalyst compound. The cocatalyst compound activates the transition metal compound, and may be an aluminoxane compound, an organo-aluminum compound, or a bulky compound activating the catalyst compound. Specifically, the cocatalyst compound may be selected from the group consisting of compounds represented by the following Formulas 2 to 4.

[Formula 2] $-[Al(Ra)-O]_n-$

In Formula 2 above,

Ra is each independently halogen; or a ($C_1$-$C_{20}$) hydrocarbyl group substituted or unsubstituted with halogen, n is an integer greater than or equal to 2.

[Formula 3] $Q(Rb)_3$

In Formula 3 above,

Q is aluminum or boron,
Rb is each independently halogen; or a ($C_1$-$C_{20}$) hydrocarbyl group substituted or unsubstituted with halogen.

[Formula 4] $[W]^+[Z(Rc)_4]^-$

In Formula 4 above,

[W]+ is a cationic Lewis acid; or a cationic Lewis acid with a hydrogen atom bonded thereto,
Z is a group 13 element,
Rc is each independently a ($C_6$-$C_{20}$)aryl group substituted with one or two or more substituents selected from the group consisting of halogen, a ($C_1$-$C_{20}$)hydrocarbyl group, an alkoxy group, and a phenoxy group; and a ($C_1$-$C_{20}$) alkyl group substituted with one or two or more substituents selected from the group consisting of halogen, a ($C_1$-$C_{20}$) hydrocarbyl group, an alkoxy group, and a phenoxy group.

The cocatalyst compound is included in a catalyst together with the transition metal compound represented by Formula 1 and serves to activate the transition metal compound. Specifically, in order for the transition metal compound to become an active catalyst component used in olefin polymerization, while extracting a ligand from a transition metal compound and cationizing the central metal ($M^1$ or $M^2$), the compound containing a unit represented by Formula 2, the compound represented by Formula 3 and the compound represented by Formula 4, which may act as a counterion with weak binding force, that is, an anion, act together as cocatalysts.

The 'unit' represented by Formula 2 is a structure in which n structures within [ ] are connected in the compound. If it includes a unit represented by Formula 2, other structures in the compound are not particularly limited, the unit may be a cluster-type compound in which repeating units of Formula 2 are connected to each other, for example, a spherical compound.

In order for the cocatalyst compound to exhibit a better activation effect, the compound represented by Formula 2 is not particularly limited as long as it is alkylaluminoxane, but preferable examples thereof include methylaluminoxane, ethylaluminoxane, isobutylaluminoxane, and butylaluminoxane. Oxylic acid and the like, and a particularly preferable compound is methylaluminoxane. In addition, the compound represented by Formula 3 is not particularly limited as an alkyl metal compound, and non-limiting examples thereof include trimethyl aluminum, triethyl aluminum, triisobutyl aluminum, tripropyl aluminum, tributyl aluminum, dimethyl chloroaluminum, triiso Propyl aluminum, tri-s-butyl aluminum, tricyclopentyl aluminum, tripentyl aluminum, triisopentyl aluminum, trihexyl aluminum, trioctyl aluminum, ethyldimethyl aluminum, methyldiethyl aluminum, triphenyl aluminum, tri-p-tolyl aluminum, dimethyl aluminum methoxide, dimethyl aluminum ethoxide, trimethyl boron, triethyl boron, triisobutyl boron, tripropyl boron, tributyl boron, and the like.

Considering the activation of the transition metal compound, one or two or more types selected from the group consisting of trimethyl aluminum, triethyl aluminum, and triisobutyl aluminum may be preferably used.

Considering the activation of the transition metal compound, the compound represented by Formula 4, when $[W]^+$ is a cationic Lewis acid to which a hydrogen atom is bonded, it is a dimethylanilinium cation, and when $[W]^+$ is a cationic Lewis acid, it is $[(C_6H_5)_3C]^+$, and $[Z(Rc)_4]^-$ may be preferably $[B(C_6F_5)_4]^-$.

The compound represented by Formula 4 is not particularly limited, but non-limiting examples in which $[W]^+$ is a cationic Lewis acid to which a hydrogen atom is bonded include triphenylcarbenium borate, trimethylammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyclooctadecylammonium tetraphenylborate, N,N-dimethylanilnium tetraphenylborate, N,N-diethylanilium tetraphenylborate, N,N-dimethyl(2,4,6-trimethylanilnium)tetraphenylborate,trimethylammonium tetrakis(pentafluorophenyl)borate,methylditetradecylammoniu m tetrakis (pentaphenyl)borate, methyldioctadecylammonium tetrakis(pentafluorophenyl)borate,triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilnium tetrakis(pentafluorophenyl)borate, N,N-diethylanilium tetrakis(pentafluorophenyl)borate, N,N- dimethyl(2,4,6-trimethylanilnium)tetrakis(pentafluorophenyl)borate, trimethylammonium tetrakis (2,3,4,6-tetrafluorophenyl) borate, triethylammonium tetrakis (2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-(2,4,6-trimethylanilinium)tetrakis-(2,3,4,6-tetrafluorophenyl)borate, dioctadecylammonium tetrakis(pentafluorophenyl)borate, ditetradecylammonium tetrakis(pentafluorophenyl)borate, dicyclohexylammonium tetrakis(pentafluorophenyl)borate, triphenylphosphonium tetrakis(pentafluorophenyl)borate, methyldioctadecylphosphonium tetrakis(pentafluorophenyl)borate, tri(2,6-dimethylphenyl)phosphonium tetrakis(pentafluorophenyl)borate, methyldi (octadecyl) ammonium tetrakis(pentafluorophenyl)borate, methyldi(tetradecyl)-ammonium tetrakis(pentafluorophenyl)borate, trityl tetrakis(pentafluorophenyl)borate and the like.

A catalyst may be prepared using the compounds of Formula 1 to Formula 4. In this case, the method exemplified below can be used to prepare the catalyst.

First, when $Q^1$ and $Q^2$ of the transition metal compound represented by Formula 1 are halogens, there is a method of contacting the compound represented by Formula 2. Second, when $Q^1$ and $Q^2$ in Formula 1 are alkyl radicals, a catalyst may be prepared by contacting a mixture of a transition metal compound with a compound represented by Formulas 3 and 4, or a catalyst may be prepared by directly adding the compounds represented by Formulas 3 and 4 into a polymerization reactor, respectively.

The amount of the cocatalyst compound added may be determined by considering the amount of the transition metal compound represented by Formula 1 and the amount necessary to sufficiently activate the transition metal compound. The content of the cocatalyst compound may be 1:1 to 100,000 based on the molar ratio of the metal contained in the cocatalyst compound, with respect to 1 mole of the transition metal contained in the transition metal compound represented by Formula 1, and preferably, may be 1:1 to 10,000, more preferably 1:1 to 5,000.

More specifically, in the case of the first method, with respect to the transition metal compound represented by Formula 1, the compound represented by Formula 2 may be preferably included in a molar ratio of 1: 10 to 5,000, more preferably in a molar ratio of 1:50 to 1,000, and most preferably in a molar ratio of 1:100 to 1,000. When the molar ratio of the compound represented by Formula 2 with respect to the transition metal compound of Formula 1 is less than 1:10, an amount of aluminoxane is so small that a problem in which activation of the transition metal compound cannot proceed completely may occur, and when the molar ratio thereof exceeds 1: 5,000, excess aluminoxane may act as a catalyst poison and a polymer chain may not grow well.

In the case of the second method, when A of the cocatalyst compound represented by Formula 3 is boron, with respect to the transition metal compound represented by Formula 1, the compound may be included in a molar ratio of 1:1 to 100, preferably in a molar ratio of 1:1 to 10, and more preferably in a molar ratio of 1:1 to 3. In addition, when A of the cocatalyst compound represented by Formula 3 is aluminum, it may vary depending on an amount of water in the polymerization system, but is 1:1 to 1000, preferably 1:1, with respect to the transition metal compound represented by Formula 1, it may be included in a molar ratio of 1 to 500, more preferably 1:1 to 100.

In addition, the cocatalyst compound represented by Formula 4 may be included in a molar ratio of 1:0.5 to 30, preferably 1:0.7 to 20, and more preferably 1:1 to 10 with respect to the transition metal compound represented by Formula 1. If a ratio of the cocatalyst compound represented by Formula 4 is less than 1:0.5, an amount of activator is relatively small and the metal compound cannot be fully activated, which may cause a problem in that the activity of the resulting catalyst composition decreases. If the ratio of the cocatalyst compound represented by Formula 4 exceeds 1:30, the metal compound is fully activated, but a unit cost of the catalyst composition may be not economical due to the remaining excess activator, or the purity of the produced polymer may be low.

Meanwhile, the catalyst composition of the present disclosure including the transition metal compound and the cocatalyst compound may further include a carrier. Here, as the carrier, any carrier formed of inorganic or organic materials used in the production of catalysts in the technical field to which the present disclosure pertains may be used without limitation.

According to the present disclosure, the carrier may be $SiO_2$, $Al_2O_3$, MgO, $MgCl_2$, $CaCl_2$, $ZrO_2$, $TiO_2$, $B_2O_3$, CaO, ZnO, BaO, $ThO_2$, $SiO_2$-$Al_2O_3$, $SiO_2$-MgO, $SiO_2$-$TiO_2$, $SiO_2$-$V_2O_5$, $SiO_2$-$Cr_2O_3$, $SiO_2$-$TiO_2$-MgO, bauxite, zeolite, starch, cyclodextrin, or a synthetic polymer.

Preferably, the carrier includes a hydroxy group on the surface, and may be one or more selected from the group consisting of silica ($SiO_2$), silica-alumina ($SiO_2$-$Al_2O_3$), and silica-magnesia ($SiO_2$-MgO).

As a method of supporting a catalyst containing the transition metal compound and the cocatalyst compound on the carrier, a method of directly supporting the transition metal compound on a dehydrated carrier; a method of pretreating the carrier with the cocatalyst compound and then supporting the transition metal compound; a method of supporting the transition metal compound on the carrier and then post-treating the same with the cocatalyst compound;

and a method of reacting the transition metal compound and the cocatalyst compound and then reacting by adding the carrier may be used.

A solvent that can be used in the above supporting method may be an aromatic hydrocarbon-based solvent, an aromatic hydrocarbon-based solvent, a halogenated aliphatic hydrocarbon-based solvent, or a mixture thereof.

As non-limiting examples, the aliphatic hydrocarbon-based solvent may include pentane, hexane, heptane, octane, nonane, decane, undecane, dodecane, or the like.

As non-limiting examples, the aromatic hydrocarbon-based solvent may include benzene, monochlorobenzene, dichlorobenzene, trichlorobenzene, toluene, or the like.

As non-limiting examples, the halogenated aliphatic hydrocarbon-based solvent may include dichloromethane, trichloromethane, dichloroethane, trichloroethane, or the like.

In addition, it is advantageous in terms of efficiency of the supporting process that the supporting method is performed at a temperature within a range of -70 to 200°C, preferably -50 to 150°C, and more preferably 0 to 100°C.

Meanwhile, in the present disclosure, the ethylene alpha-olefin polymer produced through a polymerization process performed by directly contacting ethylene and alpha-olefin comonomer compounds may be prepared by polymerization of monomers under conditions where the catalytic sites are relatively insoluble and/or immobilized so that the polymer chains are rapidly immobilized according to these information. This immobilization may be performed, for example, by using a solid insoluble catalyst, by performing the polymerization in a medium in which the resulting polymer is generally insoluble, and by maintaining the polymerization reactants and products to be a crystallization temperature ($T_c$) of the polymer or lower.

The above-described catalyst may be preferably applied to the copolymerization of ethylene and alpha-olefin. Hereinafter, a method for preparing an ethylene alpha-olefin copolymer including an operation of copolymerizing ethylene and alpha-olefin under the catalyst will be described.

The process for the polymerization of ethylene and alpha-olefin are well known in the art, and include bulk polymerization, solution polymerization, slurry polymerization and low-pressure gas phase polymerization. Metallocene catalysts are particularly useful in known forms of operation using fixed bed, moving bed or slurry processes performed in single, series or parallel reactors.

When the polymerization reaction is performed in a liquid or slurry phase, a solvent or propylene or ethylene monomer itself can be used as a medium.

Since the catalyst presented in the present disclosure exists in a uniform form within a polymerization reactor, it is preferable to apply the same to a solution polymerization process conducted at a temperature above a melting point of the polymer. However, as disclosed in U.S. Patent No. 4,752,597, the catalyst may also be used in a slurry polymerization or gas phase polymerization process in the form of a heterogeneous catalyst composition obtained by supporting the transition metal compound and cocatalyst on a porous metal oxide support. Therefore, if the catalyst of the present invention is used with an inorganic carrier or an organic polymer carrier, it can be applied to slurry or gas phase process. That is, the transition metal compound and cocatalyst compound can be used in a form supported on an inorganic carrier or an organic polymer carrier.

Solvents that can be used during the polymerization reaction may be aliphatic hydrocarbon-based solvents, aromatic hydrocarbon-based solvents, halogenated aliphatic hydrocarbon-based solvents, or mixtures thereof. Here, non-limiting examples of the aliphatic hydrocarbon solvent may include butane, isobutane, pentane, hexane, heptane, octane, nonane, decane, undecane, dodecane, cyclopentane, methylcyclopentane, cyclohexane, and the like. In addition, non-limiting examples of the aromatic hydrocarbon solvents may include benzene, monochlorobenzene, dichlorobenzene, trichlorobenzene, toluene, xylene, chlorobenzene, and the like. In addition, non-limiting examples of the halogenated aliphatic hydrocarbon solvent may include dichloromethane, trichloromethane, chloroethane, dichloroethane, trichloroethane, 1,2-dichloroethane, and the like.

As described above, the ethylene alpha-olefin copolymer according to the present invention may be prepared by polymerizing ethylene and alpha-olefin comonomer in the presence of the catalyst composition. In this case, the transition metal compound and the cocatalyst component may be added separately to the reactor, or each component can be mixed in advance and then added to the reactor, and there are no restrictions on mixing conditions such as introduction order, temperature, or concentration. For example, when preparing a copolymer of ethylene and 1-octene, 1-octene may be included in an amount of 0.1 to 99.9% by weight, preferably 1 to 75% by weight, more preferably 5 to 50% by weight.

Meanwhile, an amount of the catalyst added in the polymerization reaction according to the present disclosure is not particularly limited because it can be determined within a range in which the polymerization reaction of the monomer can sufficiently occur depending on the slurry phase, liquid phase, gas phase, or solution process. However, the amount of the catalyst added is preferably $10^{-8}$ to 1 mol/L, based on the concentration of the central metal (M) in the transition metal compound per unit volume (L) of monomer, it is more preferably $10^{-7}$ to $10^{-1}$ mol/L, and it is even more preferably $10^{-7}$ to $10^{-2}$ mol/L.

In addition, the polymerization reaction of the present disclosure may be performed as a batch type, semi-continuous type, or continuous type reaction, and may be preferably performed as a continuous reaction.

Temperature conditions for the polymerization reaction of the present disclosure may be determined by considering the efficiency of the polymerization reaction depending on the type of reaction to be applied and the type of reactor. However, since the temperature of the polymerization reaction affects catalyst activity, it is preferable to perform the polymerization reaction at a temperature within a range of 130 to 160°C. If the temperature is lower than 130°C or higher than 160°C, catalyst activity decreases, which is not desirable.

Meanwhile, pressure conditions for the polymerization reaction can be determined considering the efficiency of the polymerization reaction depending on the type of reaction to be applied and the type of reactor, and the pressure may be 1 to 100 atmospheres, preferably 5 to 50 atmospheres.

The ethylene alpha-olefin copolymer prepared according to the present disclosure has a wide lamella thickness distribution since it includes both a low-crystalline region and a high-crystalline region. Preferably, the ethylene alpha-olefin copolymer may have a lamella thickness distribution of 1.2 or more, and a ratio of lamella with a thickness of 4 nm or more may be 10% or more, and a ratio of lamella with a thickness of 6 nm or more may be 5% or more with respect to all lamellae.

In addition, the ethylene alpha-olefin copolymer may have a similar range of physical properties to existing ethylene alpha-olefin copolymers, and specifically may have a density of 0.850 to 0.920 g/mL and a melt index (MI) of 0.1 to 50 g/10 min.

In addition, the ethylene alpha-olefin copolymer may have a weight average molecular weight (Mw) of 10,000 to 1,000,000 g/mol, preferably 50,000 to 800,000 g/mol, more preferably 230,000 to 500,000 g/mol, and may have a molecular weight distribution (Mw /Mn) of 1 to 10, preferably 1.5 to 8, and more preferably 1.5 to 6.

Since the ethylene alpha-olefin copolymer according to the present disclosure exhibits a wider lamella thickness distribution compared to ethylene alpha-olefin copolymers having similar ranges of density and melt index, the resin composition including such an ethylene alpha-olefin copolymer may have high impact strength without deterioration in tensile strength and tensile elongation.

Mode for Invention

Hereinafter, the present disclosure will be described in more detail through specific examples. The following examples are merely examples to aid understanding of the present disclosure, and the scope of the present disclosure is not limited thereto.

**Synthesis Example - Transition Metal Compound Synthesis**

According to Reaction equation 2 below, a transition metal compound used as a main catalyst was synthesized. A specific synthesis process is as follows.

[Reaction equation 2]

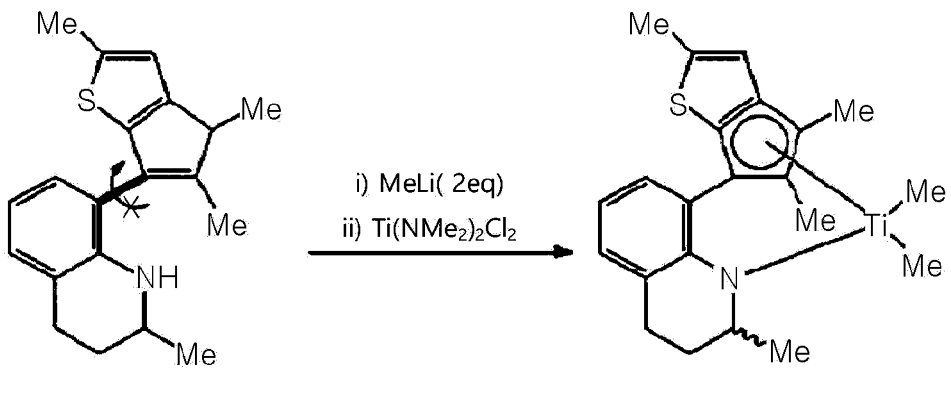


Compound (1) Compound (2)

First, methyllithium (1.63 g, 3.55 mmol, 1.6 M diethyl ether solution) was added dropwise to a diethyl ether

solution (10 mL) in which a compound (1) (0.58 g, 1.79 mmol) was dissolved at -30°C (i).

The solution was stirred at room temperature overnight, a temperature of the solution was lowered to - 30°C, and then $Ti(NMe_2)_2Cl_2$(0.37g, 1.79 mmol) was added all at once (ii). The solution was stirred for 3 hours and then all solvents were removed using a vacuum pump. As a result, a red solid compound (2) was obtained (0.59 g, yield 75%). Through a $^1H$ NMR spectrum, it was confirmed that two stereocompounds exist in a ratio of 1:0.8.

$^1H$ NMR ($C_6D_6$): d 7.12 and 7.09 (d, J = 7.2 Hz, 1H), 6.96 and 6.94 (d, J = 7.2 Hz, 1H), 6.82 and 6.80 (t, J = 7.2Hz, 1H),6.47 and 6.46 (d,J = 7.2Hz,1H), 6.45 and 6.44 (d, J = 7.2Hz, 1H), 5.44 (m, 1H, NCH), 2.76-2.60 (m, 1H, $CH_2$), 2.44-2.18 (m, 1H, $CH_2$), 2.28 and 2.22 (s, 3H), 2.09 (s, 3H), 1.74 and 1.65 (s, 3H), 1.88-1.48 (m, 2H, $CH_2$), 1.20 and 1.18 (d, J = 7.2 Hz, 3H), 0.77 and 0.71 (s, 3H, TiMe), 0.49 and 0.40 (s, 3H, TiMe) ppm.

$^{13}C\{1H\}$ NMR ($C_6D_6$): d 159.83, 159.52, 145.93, 144.90, 140.78, 139.93, 139.21, 138.86, 135.26, 131.56, 129.69, 129.57, 127.50, 127.46, 127.38, 127.24, 121.29, 121.16, 120.05, 119.96, 118.90, 118.74, 117.99, 117.74, 113.87, 110.38, 57.91, 55.31, 54.87, 51.68, 50.27, 50.12, 34.77, 27.58, 27.27, 23.10, 22.05, 20.31, 19.90, 16.66, 14.70, 13.11, 12.98, 12.68 ppm. Anal. Calc. ($C_{22}H_{27}NSTi$): C, 68.56; H, 7.06; N, 3.63. Found: C, 68.43; H, 7.24; N, 3.52%.

## Copolymer preparation

### (1) Example 1

An inside of a high-pressure reactor (internal capacity: 2.8 L, stainless steel) was substituted for nitrogen at room temperature, and 1L of normal hexane and 2.0 mmol of triisobutylaluminum were added, and then 250.0 mL of 1-octene purified in alumina was added. Then, 135.0 g of ethylene gas was injected, and a temperature of the reactor was preheated to 136°C.

A solution of dimethylanilinium tetrakis (pentablueorophenyl) borate cocatalyst (45.0 μmol) was mixed with a mixed solution including a solid transition metal compound (7.5 μmol) and triisobutyl aluminum (187.5 μmol), synthesized in a synthesis example and injected into the reactor, and then a polymerization reaction was performed for 5 minutes.

When the polymerization reaction was completed, the temperature was lowered to room temperature, excess ethylene was discharged, and the copolymer dispersed in the solvent was dried at 80°C in a vacuum oven.

### (2) Example 2

A copolymer was prepared by performing a polymerization reaction in the same manner as in Example 1, except that the reactor temperature was preheated to 146°C.

### (3) Comparative Example 1

A commercially available ethylene alpha-olefin copolymer (Dow, Engage8200) was used.

## Resin composition preparation

70% by weight of polypropylene (Lotte Chemical Co., Ltd., JM-380), 20% by weight of copolymers of Example and Comparative Example, and 10% by weight of Talc were blended using a tumbler mixer, and a resin composition in a pellet state was prepared by extrusion at a temperature within a range of 190 to 230°C in a single-screw extruder with an L/D of 35 and a diameter of 40 mm. The prepared pellet-state resin composition was molded at a temperature within a range of 190 to 240°C using an injection molding machine to prepare a property specimen.

## Property analysis of copolymer and resin compositions

### (1) Density

A sheet with a thickness of 3 mm and a radius of 2 cm was manufactured using a copolymer treated with an antioxidant using a compression mold at 180°C, cooled to room temperature, and measured according to ASTM D-792 (manufacturer: Toyoseiki, model name: T-001).

### (2) Melt index (MI)

A melt index (MI) was measured according to ASTM D-1238 (Condition E, 190°C, 2.16 kg load) (manufacturer: Mirage, model name: SD-120L).

**(3) Lamella thickness**

A lamella thickness of each fraction peak was calculated using the Gibbs-Thomson equation in Equation 1 (manufacturer: Perkinelmer, model name: DSC8000). An analysis method for each fraction follows the procedure below.

1) heating: -80°C → 150°C (@10°C/min)
2) holding 5min
3) cooling: 150°C → -80°C (@10°C/min)
4) holding 3min
5) heating: -80°C → 20°C (@10°C/min)
6) holding 5min
7) cooling: 20°C → -80°C (@10°C/min)
8) holding 3min
9) heating: -80°C → 40°C (@10°C/min)
10) holding 5min
11) cooling: 40°C → -80°C (@10°C/min)
12) holding 3min
13) heating: -80°C → 60°C (@10°C/min)
14) holding 5min
15) cooling: 60°C → -80°C (@10°C/min)
16) holding 3min
17) heating: -80°C → 80°C (@10°C/min)
18) holding 5min
19) cooling: 80°C → -80°C (@10°C/min)
20) holding 3min
21) heating: -80°C → 100°C (@10°C/min)
22) holding 5min
23) cooling: 100°C → -80°C (@10°C/min)
24) holding 3min
25) heating: -80°C → 120°C (@10°C/min)
26) holding 5min
27) cooling: 120°C → -80°C (@10°C/min)
28) holding 3min
29) heating: -80°C → 140°C (@10°C/min)

[Equation 1]

$$L = 2\sigma T^{\circ}_{m} / \Delta Ho(T^{\circ}_{m} - T_{m})$$

L: Lamella thickness [nm]
$\sigma$: Lamella surface free energy (0.0609 J/m$^2$)
$T^{\circ}_{m}$: Equilibrium melting temperature (415 K)
$T_m$: melting temperature [K]
$\Delta H_o$: enthalpy of fusion per unit volume (2.88E+08 J/m$^3$)

**(4) Copolymer ratio for each lamella thickness**

A ratio of a heat amount (H) for each fraction peak to a total heat amount (total H) was calculated according to Equation 2 below.

[Equation 2]

(H/total H)

**(5) Lamella Thickness Distribution (LTD)**

Lamella thickness distribution (LTD) was calculated using Equation 3 below.

[Equation 3]

$$L_n=\frac{n_1L_1+n_2L_2+\cdots+njLj}{n_1+n_2+\cdots+n_j} \quad L_w=\frac{n_1L_1^2+n_2L_2^2+\cdots+n_jL_j^2}{n_1+n_2+\cdots+n_j} \quad \mathrm{LTD}=\frac{L_w}{L_n}$$

$L_1$ to $L_j$: Lamella thickness
$n_1$ to $n_j$: Lamella thickness ratio

**(6) Tensile elongation**

Tensile elongation was measured according to the method of ASTM D638.

**(7) Tensile strength**

Tensile strength was measured according to the method of ASTM D638.

**(8) IZOD impact strength (23°C)**

Notch impact strength of 1/8" specimens was measured at 23°C according to the method of ASTM D256.

**(9) IZOD impact strength (-30°C)**

Notch impact strength of 1/8" specimens was measured at -30°C according to the method of ASTM D256.

[Table 1]

| | | | EXAMPLE 1 | EXAMPLE 2 | COMPARATIVE EXAMPLE 1 |
|---|---|---|---|---|---|
| POLYMERIZATION REACTION TEMPERATURE (°C) | | | 136 | 146 | - |
| COPOLYMER PROPERTIES | DENSITY(g/mL) | | 0.870 | 0.870 | 0.870 |
| | MI(g/10min) | | 5.0 | 5.0 | 5.0 |
| | RATIO OF COPOLYMER WITH CORRESPONDING LAMELLA THICKNESS (%) | 1.5nm | 13.9 | 11.9 | 9.2 |
| | | 1.8nm | 13.3 | 12.1 | 6.8 |
| | | 2.0nm | 15.5 | 17.3 | 14.0 |
| | | 2.4nm | 21.9 | 25.6 | 22.3 |
| | | 3.1nm | 12.8 | 19.1 | 47.1 |
| | | 4. lm | 8.4 | 5.9 | 0.6 |
| | | 6.1nm | 14.2 | 8.0 | - |
| | LAMELLA THICKNESS DISTRIBUTION | | 1.26 | 1.20 | 1.03 |
| RESIN COMPOSITION PROCESSING PROPERTIES | TENSILE ELONGATION (%) | | 69 | 70 | 70 |
| | TENSILE STRENGTH(MPa) | | 16.2 | 16.6 | 16.7 |
| | IZOD IMPACT STRENGTH (23°C, J/m) | | 388.1 | 380.9 | 358.7 |
| | IZOD IMPACT STRENGTH (-30°C, J/m) | | 35.3 | 35.4 | 28.4 |

Referring to Table 1 and FIG. 1, it can be seen that Examples 1 and 2 have a lamella ratio with a thickness of 4.0 nm or more that is about 10 times higher than that of Comparative Example 1. In particular, Comparative Example 1 does not include any lamella with a thickness of 6.0 nm or more, but Examples 1 and 2 include 14.2% and 8.0% of lamella with a thickness of 6.0 nm or more, respectively, and are similar to or slightly less than a ratio of lamella with a thickness of 1.5 nm, which is determined as a factor in maintaining overall density and MI of a copolymer.

These results are due to the preparation of the copolymers of Examples 1 and 2 under a catalyst containing a compound (2), and the compound (2) has R-type and S-type isomers as follows. Depending on a structure of the compound (2), an ethylene conversion rate varies and a lamella thickness of the copolymer also varies.

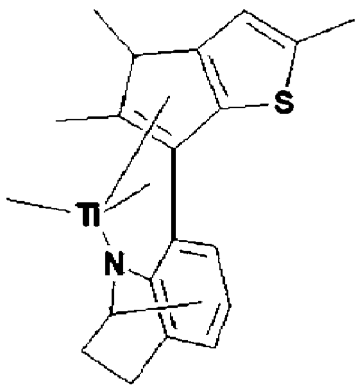

[R-type]

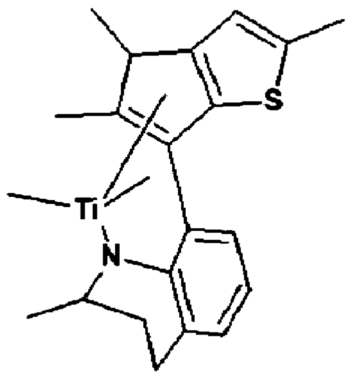

[S-type]

That is, the copolymers of Examples 1 and 2 had both a low-crystalline region with a lamella thickness of 1.5 nm to 1.8 nm and a high-crystalline region with a lamella thickness of 4.0 nm or more, resulting in a wide lamella thickness distribution.

Furthermore, a resin composition obtained by mixing the copolymers of Examples 1 and 2 with polypropylene had similar levels of tensile strength and tensile elongation as compared to Comparative Example 1, and impact strength at room and low temperatures was significantly improved.

While example embodiments have been shown and described above, it will be apparent to those skilled in the art that modifications and variations could be made without departing from the scope of the present disclosure as defined by the appended claims.

## Claims

1. In an ethylene alpha-olefin copolymer including an ethylene structural unit and an alpha-olefin structural unit is provided,
   wherein in the ethylene alpha-olefin copolymer, a ratio of lamella having a thickness of 4 nm or more to all lamellae is 10% or more.

2. The ethylene alpha-olefin copolymer of claim 1, wherein a ratio of lamella having a thickness of 6 nm or more to all lamellae is 5% or more.

3. The ethylene alpha-olefin copolymer of claim 1, wherein a lamella thickness distribution is 1.2 or more.

4. The ethylene alpha-olefin copolymer of claim 1, wherein the ethylene alpha-olefin copolymer is polymerized under a catalyst composition including an R-type and a S-type of a transition metal compound represented by the following formula 1,

[Formula 1]

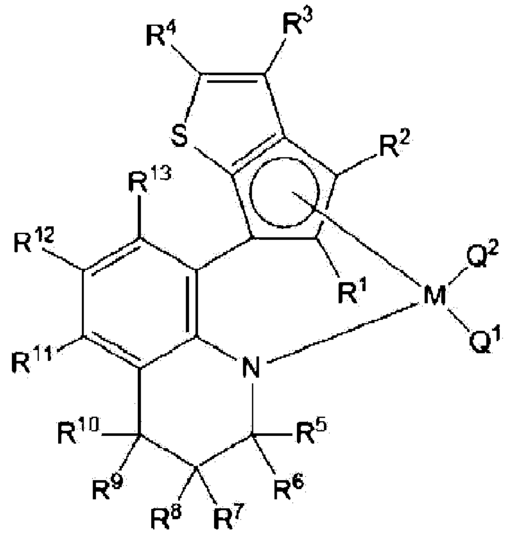

In Formula 1 above,

M is a group 4 transition metal;
$Q^1$ and $Q^2$ are each independently halogen, $(C_1-C_{20})$alkyl, $(C_2-C_{20})$alkenyl, $(C_2-C_{20})$alkynyl, $(C_6-C_{20})$aryl, $(C_1-C_{20})$alkyl $(C_6-C_{20})$aryl, $(c_6-c_{20})$aryl$(C_1-C_{20})$alkyl, $(C_1-C_{20})$alkylamido, $(C_6-C_{20})$arylamido or $(C_1-C_{20})$alkylidene;
$R^1$, $R^2$, $R^3$, $R^4$, $R^5$, $R^6$, $R^7$, $R^8$, $R^9$ and $R^{10}$ are each independently hydrogen; $(C_1-C_{20})$alkyl with or without acetal, ketal or ether groups; $(C_2-C_{20})$alkenyl with or without acetal, ketal or ether groups; $(C_1-C_{20})$alkyl $(C_6-C_{20})$aryl with or without acetal, ketal or ether groups; $(C_6-C_{20})$aryl $(C_1-C_{20})$alkyl with or without acetal, ketal or ether groups; or$(C_1-C_{20})$ silyl with or without acetal, ketal or ether groups;
$R^1$ and $R^2$ are connected to each other to form a ring, $R^3$ and $R^4$ are connected to each other to form a ring, among $R^5$ to $R^{10}$, two or more thereof are connected to each other to form a ring;
$R^{11}$, $R^{12}$ and $R^{13}$ are each independently hydrogen; $(C_1-C_{20})$alkyl with or without acetal, ketal or ether groups; $(C_2-C_{20})$alkenyl with or without acetal, ketal or ether groups; $(C_1-C_{20})$alkyl $(C_6-C_{20})$aryl with or without acetal, ketal or ether groups; $(C_6-C_{20})$aryl $(C_1-C_{20})$alkyl with or without acetal, ketal or ether groups; $(C_1-C_{20})$silyl with or without acetal, ketal or ether groups; $(C_1-C_{20})$alkoxy; or $(C_6-C_{20})$aryloxy; and
$R^{11}$ and $R^{12}$ are connected to each other to form a ring, and $R^{12}$ and $R^{13}$ are connected to each other to form a ring.

**5.** The ethylene alpha-olefin copolymer of claim 4, wherein a molar ratio of the R-type and S-type in the catalyst composition is 1:0.1 to 1:1.

**6.** The ethylene alpha-olefin copolymer of claim 4, wherein the catalyst composition further comprises a cocatalyst compound selected from the group consisting of compounds represented by the following formulas 2 to 4:

[Formula 2] $-[Al(Ra)-O]_n-$

-In Formula 2 above,
Ra is each independently halogen; or a $(C_1-C_{20})$ hydrocarbyl group substituted or unsubstituted with halogen, where n is an integer greater than or equal to 2,

[Formula 3] $Q(Rb)_3$

In Formula 3 above,

Q is aluminum or boron,
Rb is each independently halogen; or a $(C_1-C_{20})$ hydrocarbyl group substituted or unsubstituted with halogen,

[Formula 4] $[W]^+[Z(Rc)_4]^-$

In Formula 4 above,

[W]+ is cationic Lewis acid; or cationic Lewis acid with a hydrogen atom bonded thereto,
Z is a group 13 element,
Rc is each independently a ($C_6$-$C_{20}$)aryl group substituted with one or two or more substituents selected from the group consisting of halogen, a ($C_1$-$C_{20}$)hydrocarbyl group, an alkoxy group, and a phenoxy group; and a ($C_1$-$C_{20}$) alkyl group substituted with one or two or more substituents selected from the group consisting of halogen, a ($C_1$-$C_{20}$) hydrocarbyl group, an alkoxy group, and a phenoxy group.

**7.** A resin composition comprising a polyolefin and the ethylene alpha-olefin copolymer according to any one of claims 1 to 6.

FIG. 1

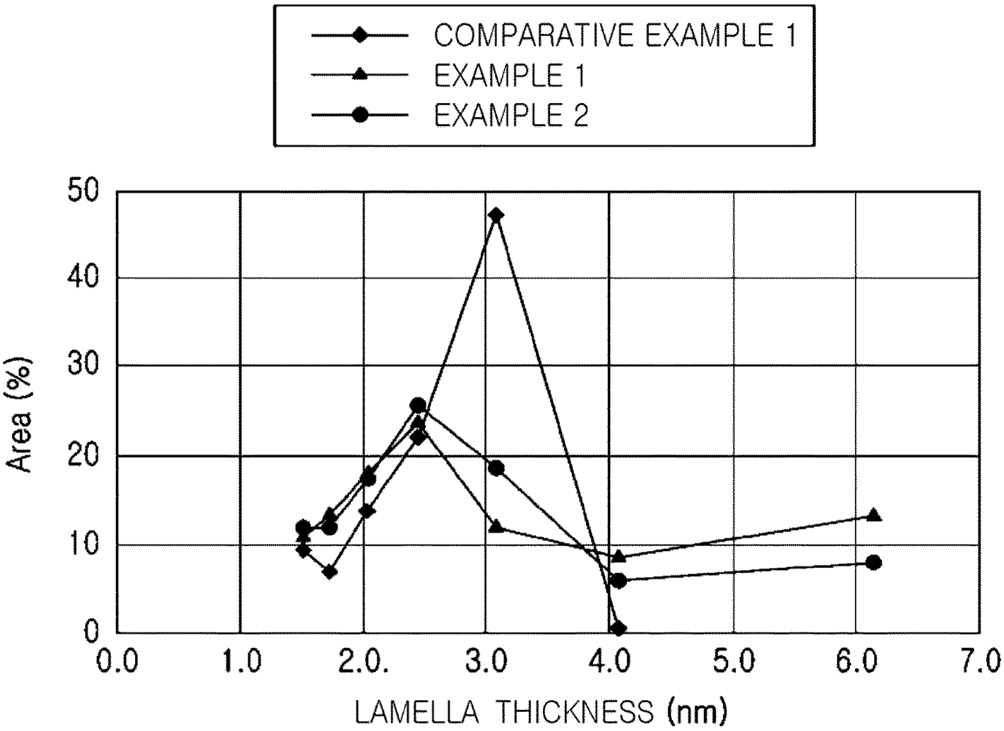
COMPARATIVE EXAMPLE 1
EXAMPLE 1
EXAMPLE 2
Area (%)
50
40
30
20
10
0
0.0
1.0
2.0.
3.0
4.0
5.0
6.0
7.0
LAMELLA THICKNESS (nm)

**INTERNATIONAL SEARCH REPORT**

International application No. **PCT/KR2022/018708**

**A. CLASSIFICATION OF SUBJECT MATTER**

**C08F 210/16**(2006.01)i; **C08F 4/6592**(2006.01)i; **C08F 4/659**(2006.01)i; **C08L 23/00**(2006.01)i; **C08L 23/08**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/00(2006.01); C08F 2/00(2006.01); C08F 210/02(2006.01); C08F 4/619(2006.01); C08F 4/649(2006.01); C08F 4/659(2006.01); C08K 3/013(2018.01); C08K 7/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 에틸렌(ethylene), 알파올레핀(alpha-olefin), 공중합체(copolymer), 라멜라(lamellar), 두께(thickness)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0067264 A (LOTTE CHEMICAL CORPORATION) 08 June 2021 (2021-06-08) See claims 1-5; and paragraphs [0115]-[0130] and [0161]. | 1-7 |
| X | KR 10-2017-0105789 A (HANWHA CHEMICAL CORPORATION) 20 September 2017 (2017-09-20) See claims 1-6, 14 and 17; and paragraph [0202]. | 1-3 |
| X | KR 10-2021-0067338 A (LOTTE CHEMICAL CORPORATION) 08 June 2021 (2021-06-08) See claims 1-7; and paragraphs [0119]-[0133]. | 1-7 |
| X | KR 10-2019-0010563 A (CHINA PETROLEUM AND CHEMICAL CORPORATION et al.) 30 January 2019 (2019-01-30) See claims 1, 4 and 16. | 1-3 |
| X | KR 10-2015-0034655 A (LG CHEM, LTD.) 03 April 2015 (2015-04-03) See claims 1, 6, 7, 12-14 and 19; and paragraphs [0025], [0193], [0194], [0206]-[0208], [0214]-[0231] and [0256]. | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2023** | **28 February 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018708**

**C. DOCUMENTS CONSIDERED TO BE RELEVANT**

| Category* | Citation of document, with indication, where appropriate, of the relevant passages | Relevant to claim No. |
|---|---|---|
| X | KIM, S. H. et al. Preparation of thiophene-fused and tetrahydroquinoline-linked cyclopentadienyl titanium complexes for ethylene/α-olefin copolymerization. Catalysts. 2013, vol. 3, pp. 104-124. See abstract; and pages 109, 110, 112-117, 119 and 120. | 1-6 |
| X | PARK, J. H. et al. Preparation of half-metallocenes of thiophene-fused and tetrahydroquinoline-linked cyclopentadienyl ligands for ethylene/α-olefin copolymerization. Dalton Transactions. 2010, vol. 39, pp. 9994-10002. See abstract; and pages 9995-9997 and 9999-10001. | 1-6 |

Form PCT/ISA/210 (second sheet) (July 2022)

**INTERNATIONAL SEARCH REPORT**
**Information on patent family members**

International application No.
**PCT/KR2022/018708**

| Patent document cited in search report | Publication date (day/month/year) | Patent family member(s) | Publication date (day/month/year) |
|---|---|---|---|
| KR 10-2021-0067264 A | 08 June 2021 | None | |
| KR 10-2017-0105789 A | 20 September 2017 | KR 10-1848365 B1 | 12 April 2018 |
| KR 10-2021-0067338 A | 08 June 2021 | None | |
| KR 10-2019-0010563 A | 30 January 2019 | KR 10-2321154 B1 | 02 November 2021 |
| | | US 10899858 B2 | 26 January 2021 |
| | | US 2019-0127501 A1 | 02 May 2019 |
| | | WO 2017-181424 A1 | 26 October 2017 |
| KR 10-2015-0034655 A | 03 April 2015 | CN 104703994 A | 10 June 2015 |
| | | CN 104703994 B | 10 May 2017 |
| | | CN 105164139 A | 16 December 2015 |
| | | CN 105164139 B | 25 September 2018 |
| | | CN 105229039 A | 06 January 2016 |
| | | CN 105229039 B | 27 April 2018 |
| | | CN 105263940 A | 20 January 2016 |
| | | CN 105263940 B | 23 March 2018 |
| | | CN 109280119 A | 29 January 2019 |
| | | CN 109280119 B | 24 August 2021 |
| | | DE 202014011298 U1 | 08 March 2019 |
| | | EP 2873671 A1 | 20 May 2015 |
| | | EP 2873671 B1 | 04 July 2018 |
| | | EP 2975043 A1 | 20 January 2016 |
| | | EP 2975043 B1 | 19 September 2018 |
| | | EP 2980104 A1 | 03 February 2016 |
| | | EP 2980104 B1 | 04 November 2020 |
| | | EP 2982677 A1 | 10 February 2016 |
| | | EP 2982677 B1 | 01 August 2018 |
| | | JP 2015-533850 A | 26 November 2015 |
| | | JP 5972474 B2 | 17 August 2016 |
| | | KR 10-1528102 B1 | 10 June 2015 |
| | | KR 10-1577145 B1 | 11 December 2015 |
| | | KR 10-1585340 B1 | 14 January 2016 |
| | | KR 10-1603016 B1 | 11 March 2016 |
| | | KR 10-2015-0034592 A | 03 April 2015 |
| | | KR 10-2015-0034652 A | 03 April 2015 |
| | | KR 10-2015-0034653 A | 03 April 2015 |
| | | KR 10-2015-0034654 A | 03 April 2015 |
| | | US 2015-0094435 A1 | 02 April 2015 |
| | | US 2015-0361196 A1 | 17 December 2015 |
| | | US 2016-0046735 A1 | 18 February 2016 |
| | | US 2016-0272743 A1 | 22 September 2016 |
| | | US 9376519 B2 | 28 June 2016 |
| | | US 9481747 B2 | 01 November 2016 |
| | | US 9550848 B2 | 24 January 2017 |
| | | US 9683061 B2 | 20 June 2017 |
| | | WO 2015-046705 A1 | 02 April 2015 |
| | | WO 2015-046930 A1 | 02 April 2015 |
| | | WO 2015-046931 A1 | 02 April 2015 |
| | | WO 2015-046932 A1 | 02 April 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160066979 A
- KR 20080065868
- US 4752597 A


### Non-patent literature cited in the description


- *Tetrahedron Lett.,* 1985, vol. 26, 5935
- *Tetrahedron,* 1986, vol. 42, 2571
- *J.Chem.SC.Perkin Trans.,* 1989, 16
- *Organometallics,* 2007, vol. 27, 6685
- *J Organomet. Chem.,* 2005, vol. 690, 4213